**Europäisches Patentamt**

**European Patent Office**

**Office européen des brevets**

(11) Veröffentlichungsnummer: **0 496 225 A2**

# EUROPÄISCHE PATENTANMELDUNG

(21) Anmeldenummer: **92100383.6**

(22) Anmeldetag: **11.01.92**

(51) Int. Cl.⁵: **H01S 3/07**

(30) Priorität: **25.01.91 DE 4102123**

(43) Veröffentlichungstag der Anmeldung:
**29.07.92 Patentblatt 92/31**

(84) Benannte Vertragsstaaten:
**FR GB IT**

(71) Anmelder: **DEUTSCHE FORSCHUNGSANSTALT FÜR LUFT- UND RAUMFAHRT e.V.**

**W-5300 Bonn(DE)**
Anmelder: **Rofin-Sinar Laser GmbH**
**Berzeliusstrasse 87**
**W-2000 Hamburg 74(DE)**

(72) Erfinder: **Wildermuth, Eberhard, Dr.-Ing.**
**Hölderlinstrasse 9**
**W-7012 Fellbach(DE)**
Erfinder: **von Bülow, Hartwig, Dipl.-Ing.**
**Burgholzweg 117**
**W-7400 Tübingen(DE)**
Erfinder: **Schock, Wolfram, Dr.-Ing.**
**Peterstaler Strasse 28**
**W-7030 Böblingen(DE)**
Erfinder: **Porath, Jörg, Dipl.-Ing.**
**Hammer Steindamm 82**
**W-2000 Hamburg 26(DE)**
Erfinder: **Schanz, Klaus, Dipl.-Phys.**
**Schulstrasse 48**
**W-2057 Reinbek(DE)**

(74) Vertreter: **Beck, Jürgen**
**Hoeger, Stellrecht & Partner Uhlandstrasse 14c**
**W-7000 Stuttgart 1(DE)**

(54) **Längsgeströmter Gaslaser.**

(57) Um einen hochfrequenzangeregten längsgeströmten Gaslaser, umfassend einen Entladungskanal, welcher in einer Strömungsrichtung von Lasergas durchströmt ist und beiderseits des Entladungskanals angeordnete Hochfrequenzelektroden zur Erzeugung einer Hochfrequenzentladung quer zur Strömungsrichtung derart zu verbessern, daß mit diesem auf konstruktiv möglichst einfache Art und Weise hohe Leistungen erzielbar sind und daß dieser dabei möglichst kompakt aufgebaut ist, wird vorgeschlagen, daß der Entladungskanal mehrere Kanalelemente umfaßt, deren Kanalachsen parallel zueinander in der Strömungsrichtung ausgerichtet sind, daß die Kanalelemente in einer Anbaurichtung quer zur Strömungsrichtung nebeneinanderliegend angeordnet sind und daß die Kanalelemente einen Querschnitt aufweisen, welcher in einer erste Querrichtung senkrecht zur Strömungsrichtung eine größere Ausdehnung aufweist als in einer zur ersten und zur Strömungsrichtung senkrecht verlaufenden zweiten Querrichtung.

FIG. 1

Die Erfindung betrifft einen hochfrequenzangeregten längsgeströmten Gaslaser, umfassend einen Entladungskanal, welcher in einer Strömungsrichtung vom Lasergas durchströmt ist und beiderseits des Entladungskanals angeordnete Hochfrequenzelektroden zur Erzeugung einer Hochfrequenzentladung quer zur Strömungsrichtung.

Ein derartiger hochfrequenzangeregter längsgeströmter Gaslaser ist bekannt. Bei einem derartigen längsgeströmten Gaslaser ist der Entladungskanal ein runder Kanal, welcher in seiner Längsrichtung durchströmt und ebenfalls in seiner Längsrichtung von einem Strahlenbündel eines Resonators durchsetzt ist.

Zur Erhöhung der Laserleistung ist es erforderlich, das Volumen des angeregten Lasergases zu erhöhen, was beispielsweise bei einem längsgeströmten Gaslaser dazu führt, daß der Querschnitt des runden Entladungskanals vergrößert wird. Dies zieht wiederum Probleme mit der Hochfrequenzanregung nach sich, insbesondere wenn diese über den gesamten Querschnitt des Entladungskanals im wesentlichen homogen sein soll.

Der Erfindung liegt daher die Aufgabe zugrunde, einen hochfrequenzangeregten längsgeströmten Gaslaser der gattungsgemäßen Art derart zu verbessern, daß mit diesem auf konstruktiv möglichst einfache Art und Weise hohe Leistungen erzielbar sind und daß dieser dabei möglichst kompakt aufgebaut ist.

Diese Aufgabe wird bei einem hochfrequenzangeregten längsgeströmten Gaslaser der eingangs beschriebenen Art erfindungsgemäß dadurch gelöst, daß der Entladungskanal mehrere Kanalelemente umfaßt, deren Kanalachsen parallel zueinander in der Strömungsrichtung ausgerichtet sind, daß die Kanalelemente in einer Anbaurichtung quer zur Strömungsrichtung nebeneinanderliegend angeordnet sind und daß die Kanalelemente einen Querschnitt aufweisen, welcher in einer ersten Querrichtung senkrecht zur Strömungsrichtung eine größere Ausdehnung aufweist als in einer zur ersten und zur Strömungsrichtung senkrecht verlaufenden zweiten Querrichtung.

Mit dem erfindungsgemäßen Konzept wird die Möglichkeit geschaffen, in einfacher Art und Weise einen für große Laserleistungen geeigneten Entladungskanal aufzubauen, wobei der einfache Aufbau dieses Entladungskanals nicht nur daraus resultiert, daß die Kanalelemente mit ihren Kanalachsen parallel zueinander in der Strömungsrichtung ausgerichtet und nebeneinanderliegend angeordnet sind, sondern insbesondere auch dadurch, daß die Kanalelemente einen Querschnitt aufweisen, welcher in der ersten Querrichtung senkrecht zur Strömungsrichtung eine größere Ausdehnung aufweist als in einer zur ersten und zur Strömungsrichtung senkrecht verlaufenden zweiten Querrichtung, denn für eine derartige Ausbildung der Kanalelemente lassen sich diese einfacher nebeneinander anordnen. Darüber hinaus haben die derart ausgebildeten Kanalelemente den Vorteil, daß sie sich in einer sehr kompakten Art und Weise nebeneinander anordnen lassen.

Besonders vorteilhaft im Rahmen der erfindungsgemäßen Lösung ist es, wenn die erste Querrichtung parallel zur Anbaurichtung verläuft, so daß die Kanalelemente in der Anbaurichtung eine größere Ausdehnung aufweisen als senkrecht dazu.

Alternativ dazu ist es aber auch möglich, daß die zweite Querrichtung parallel zur Anbaurichtung verläuft. Optimale Verhältnisse in Bezug auf die Hochfrequenzentladung im Lasergas lassen sich dann erreichen, wenn die Hochfrequenzentladung parallel zur zweiten Querrichtung verläuft, da in dieser Richtung die Kanalelemente die kleinere Ausdehnung haben und sich die Hochfrequenzentladung sehr einfach dann stabil halten läßt, wenn die Ausdehnung des Lasergases in Richtung der Hochfrequenzentladung möglichst klein ist. Darüber hinaus schafft dieses Ausführungsbeispiel die Möglichkeit, die Kanalelemente in der ersten Richtung mit beliebiger Ausdehnung auszubilden, ohne daß dabei ein negativer Einfluß auf die Hochfrequenzentladung auftritt.

Besonders vorteilhaft im Rahmen der erfindungsgemäßen Lösung ist es, wenn die Hochfrequenzentladung in Richtung parallel zur ersten Querrichtung im wesentlichen konstant ist.

Dies läßt sich ebenfalls in einfacher Weise dadurch erreichen, daß die Hochfrequenzentladung in Richtung der zweiten Querrichtung, das heißt also durch die geringere Ausdehnung des Lasergases verläuft, so daß die Stabilisierung in Richtung der ersten Querrichtung keinerlei Probleme bereitet.

Im Hinblick auf die spätere im einzelnen erläuterte Anordnung der für die Hochfrequenzentladung erforderlichen Elektroden ist es von Vorteil, wenn die Hochfrequenzentladung senkrecht zur Anbaurichtung verläuft, da in diesem Fall die Elektroden im wesentlichen in einer zur Anbaurichtung parallelen Ebene angeordnet sein können und somit sich nicht gegenseitig beeinflussen oder stören.

Alternativ dazu ist es denkbar, wenn die Hochfrequenzentladung parallel zur Anbaurichtung verläuft. In diesem Fall liegen die Kanalelemente so, daß die Hochfrequenzelektroden benachbarter Kanalelemente einander zugewandt angeordnet sein müssen, was lediglich dann eine kompakte Lösung schafft, wenn die einander gegenüberliegenden Elektroden auf demselben Potential liegen.

In besonders einfacher Weise lassen sich die vorstehend beschriebenen Verhältnisse bezüglich der Hochfrequenzentladung dann erreichen, wenn die Kanalelemente parallel zur ersten Querrichtung verlaufende, einander gegenüberliegende abgeflachte innere Wandflächen aufweisen, da dies die einfachste Voraussetzung für eine in der ersten Querrichtung im wesentlichen konstante Hochfrequenzentladung ist.

Um auch eine möglichst konstante Hochfrequenzentladung bis in die seitlichen Wandbereiche zu erreichen, ist ferner vorteilhafterweise vorgesehen, daß die Kanalelemente parallel zur zweiten Querrichtung verlaufende einander gegenüberliegende innere Wandflächen aufweisen.

Insbesondere im Hinblick auf einen möglichst kompakten Aufbau des erfindungsgemäßen Entladungskanals ist es vorteilhaft, wenn die Kanalelemente auf gegenüberliegenden Seiten senkrecht zur Anbaurichtung verlaufend abgeflachte äußere Wandflächen aufweisen, so daß die Kanalelemente in Anbaurichtung aneinanderliegend angeordnet sein können.

Darüber hinaus läßt sich die Kompaktheit des Aufbaus noch zusätzlich dadurch verbessern, daß die Kanalelemente auf gegenüberliegenden Seiten parallel zu der Anbaurichtung verlaufend abgeflachte Wandflächen aufweisen.

Ein besonders bevorzugtes Ausführungsbeispiel sieht vor, daß die Kanalelemente einen im wesentlichen rechteckigen Innenquerschnitt aufweisen und vorzugsweise sind die Kanalelemente insgesamt so, daß sie einen im wesentlichen rechteckigen Querschnitt aufweisen.

Um bei einem Hochleistungslaser zu einem möglichst kompakten Aufbau und hoher Leistung zu gelangen, ist vorgesehen, daß die Kanalelemente von einem einen im wesentlichen dem Innenquerschnitt der Kanalelemente angepaßten Querschnitt aufweisenden Strahlenbündel durchsetzt sind, da mit einem derartigen Strahlenbündel in optimaler Weise das gesamte angeregte Lasergas zur Lasertätigkeit verwendet wird und nicht Bereiche der Gasentladung entstehen, die zwar angeregt werden, jedoch zum Laserstrahl keinen Beitrag leisten.

Ferner ist es vorteilhaft, wenn das Strahlenbündel mäanderförmig durch nebeneinanderliegende Kanalelemente hindurch verläuft.

Besonders vorteilhaft ist es in diesem Zusammenhang, wenn die Kanalelemente von einem Strahlenbündel eines instabilen Resonators durchsetzt sind.

Bei den bislang beschriebenen Ausführungsbeispielen eines längsgeströmten Gasentladungslasers wurde nicht im einzelnen darauf eingegangen, wie eine Versorgung des Entladungskanals mit Lasergas zur Durchströmung desselben erfolgen soll. So sieht ein vorteilhaftes Ausführungsbeispiel vor, daß der Entladungskanal mehrere sich beiderseits eines Lasergaskanals von diesem wegerstreckende und paarweise mit ihren Kanalachsen untereinander fluchtend angeordnete Durchtrittskanäle aufweist. Besonders vorteilhaft ist es dabei, wenn sich der Lasergaskanal in Anbaurichtung erstreckt und somit in dieser Richtung eine Verbindung zwischen allen Durchtrittskanälen schafft.

Darüber hinaus sieht ein weiteres bevorzugtes Ausführungsbeispiel vor, daß an beiden Außenseiten des Entladungskanals jeweils ein äußerer Lasergaskanal angeordnet ist, an welchen sich dem Entladungskanal gegenüberliegend jeweils eine Spiegelkammer anschließt. Mit dieser Konfiguration läßt sich in einfacher Weise die Anordnung der Spiegelkammer und die Versorgung der Durchtrittskanäle des Entladungskanals mit Lasergas lösen.

Dabei ist es besonders günstig, wenn die äußeren Lasergaskanäle Lasergaszufuhrkanäle sind, da in diesem Fall in einfacher Weise die Spiegel in den Spiegelkammern vor Verschmutzungen bewahrt werden können.

Im Rahmen der bislang beschriebenen Ausführungsbeispiele wurde nicht näher auf die Ausbildung der Kanalelemente als solche eingegangen. So sieht ein bevorzugtes Ausführungsbeispiel vor, daß die Kanalelemente identisch ausgebildet sind. In diesem Fall läßt sich insbesondere eine kostengünstige und rationelle Herstellung eines Entladungskanals mit beliebig vielen Kanalelementen erreichen. Insbesondere läßt sich ein Entladungskanal für unterschiedlichste Laserleistungen in einfacher Weise aufbauen.

Hinsichtlich der Ausbildung der Kanalelemente selbst ist es besonders vorteilhaft, wenn die Kanalelemente eine selbsttragende Struktur aufweisen, da sich somit alle Maßnahmen erübrigen, um den Kanalelementen die notwendige Stabilität zu verleihen.

Zweckmäßigerweise ist dabei vorgesehen, daß die Kanalelemente eine obere und eine untere Querwand und diese im Abstand voneinander haltende Stützstege aufweisen, die alle gemeinsam ein zusammenhängendes Teil bilden.

Vorzugsweise sind insbesondere aus Gründen der Stabilität und Dichtheit der Kanalelemente diese so ausgebildet, daß sie einstückige Teile bilden.

Darüber hinaus läßt sich in vorteilhafterweise die Ausbildung der Kanalelemente als selbsttragende Teile noch weiter ausnutzen, indem die Kanalelemente die Elektroden tragen, so daß keine zusätzlichen mechanischen Konstruktionen notwendig sind, um die Elektroden zu halten, was insbesondere im Hinblick auf die Probleme mit Spannungsüberschlägen bei der Hochfrequenzanregung von Vorteil ist.

Besonders kompakt läßt sich die erfindungsgemäße Lösung dann aufbauen, wenn die Kanalelemente in der Anbaurichtung unmittelbar nebeneinander liegen.

Bei allen bisher beschriebenen Ausführungsbeispielen wurde nicht im einzelnen darauf eingegangen, wie die Kanalelemente zu dem Entladungskanal vereinigt werden. Eine besonders vorteilhafte mechanische Konstruktion sieht dabei vor, daß die Kanalelemente durch Halteelemente miteinander verbunden sind. Zweckmäßigerweise sind die Halteelemente so ausgebildet, daß die Kanalelemente stirnseitig an Wandplatten anliegen.

Konstruktiv besonders einfach läßt sich der Entladungskanal gestalten, wenn alle in Anbaurichtung nebeneinanderliegenden Kanalelemente mit jeweils einer Stirnseite an einer gemeinsamen Wandplatte anliegen, so daß alle in einer Anbaurichtung nebeneinander liegenden Kanalelemente zwischen zwei Wandplatten liegen.

Vorteilhafterweise läßt sich eine Fixierung der Kanalelemente zwischen den Wandplatten dadurch erreichen, daß die Wandplatten mit Zugankern in Richtung aufeinanderzu beaufschlagt gehalten sind.

Um eine möglichst vorteilhafte und auch konstruktiv einfache Dichtung zwischen den Kanalelementen und den Wandplatten zu erreichen, ist vorgesehen, daß die Kanalelemente stirnseitige Öffnungen mit einer in einer Ebene liegenden und geschlossen um die Öffnungen umlaufende Dichtfläche aufweisen und daß insbesondere auch die Wandplatten um ihre mit den jeweiligen stirnseitigen Öffnungen der Kanalelemente korrespondierenden Öffnungen in einer Ebene liegende und geschlossen um diese Öffnungen umlaufende Dichtflächen aufweisen.

Weitere Merkmale und Vorteile der Erfindung sind Gegenstand der nachfolgenden Beschreibung sowie der zeichnerischen Darstellung einiger Ausführungsbeispiele. In der Zeichnung zeigen:

Fig. 1 eine perspektivische teilweise aufgebrochene Gesamtansicht eines Ausführungsbeispiels;

Fig. 2 eine vergrößerte Darstellung eines Kanalelements;

Fig. 3 eine Draufsicht auf eine Wandplatte von seiten eines Kanalelements und

Fig. 4 einen Schnitt längs Linie 4-4 in Fig. 1.

Ein Ausführungsbeispiel eines erfindungsgemäßen hochfrequenzangeregten längsgeströmten Gaslasers umfaßt einen als Ganzes mit 10 bezeichneten Entladungskanal, welcher aus einem ersten Abschnitt 12 und einem zweiten Abschnitt 14 aufgebaut ist, die beiderseits eines mittigen Lasergaskanals 16 angeordnet sind und diesen zwischen sich einschließen.

Auf der dem mittigen Lasergaskanal 16 gegenüberliegenden Seite des ersten Abschnitts 12 des Entladungskanals 10 ist ein äußerer Lasergaskanal 18 angeordnet und auf der dem mittigen Lasergaskanal 16 gegenüberliegenden Seite des zweiten Abschnitts 14 ist ein äußerer Lasergaskanal 20 vorgesehen.

Der mittige Lasergaskanal 16 dient vorzugsweise als Lasergasabfuhrkanal, während die beiden äußeren Lasergaskanäle 18 und 20 Lasergaszufuhrkanäle sind, so daß der erste Abschnitt 12 des Entladungskanals 10 und der zweite Abschnitt 14 des Entladungskanals 10 jeweils in einer Längsrichtung 22 durchströmt sind.

Senkrecht zur Längsrichtung 22 schließt sich an den mittigen Lasergaskanal ein Kühler 24 an, welcher das abgeführte Lasergas kühlt und dabei mit Kühlwasser über Kühlwasseranschlüsse 26 versorgt ist. Auf der dem mittigen Lasergaskanal gegenüberliegenden Seite des Kühlers 24 sind mehrere Radialgebläse 28 nebeneinander angeordnet, wobei die Radialgebläse 28 das vom Kühler 24 kommende gekühlte Lasergas zu den äußeren Lasergaskanälen 18 und 20 blasen. Erfindungsgemäß bläst jeweils dieselbe Zahl von Radialgebläsen 28 Lasergas zum äußeren Lasergaskanal 18 bzw. zum äußeren Lasergaskanal 20, so daß in den beiden Abschnitten 12 und 14 jeweils eine Strömung von Lasergas auf dem mittigen Lasergaskanal 16 zu entsteht.

Auf der dem ersten Abschnitt 12 gegenüberliegenden Seite des äußeren Lasergaskanals 18 ist eine Spiegelkammer 30 angeordnet, welche einen Satz von Spiegeln 32 eines Resonators für den erfindungsgemäßen längsgeströmten Gaslaser aufnimmt.

In gleicher Weise ist auf der dem zweiten Abschnitt 14 gegenüberliegenden Seite des äußeren Lasergaskanals 20 eine Spiegelkammer 34 vorgesehen, die einen Satz von Spiegeln 36 aufnimmt, welcher mit dem Satz von Spiegeln 32 gemeinsam den Resonator bildet, aus welchem ein Laserstrahl 38 austritt.

Der erste Abschnitt 12 des erfindungsgemäßen Entladungskanals 10 umfaßt vier Kanalelemente 40a-d, welche mit ihren Kanalachsen 42a-d parallel zueinander und parallel zur Längsrichtung 22 ausgerichtet sind.

Die Kanalelemente 40a-d sind erfindungsgemäß identisch ausgebildet und erstrecken sich zwischen ihren auf gegenüberliegenden Seiten angeordneten Stirnseiten 44 und 46, an welchen sie mit stirnseitigen Öffnungen 48 bzw. 50 versehen sind.

Mit ihren Stirnseiten 44 und 46 liegen die Kanalelemente 40a-d jeweils an einer Wandplatte 52 bzw. 54 an, wobei die Wandplatten 52 und 54 jeweils mit mit den stirnseitigen Öffnungen 48 und 50 fluchtenden Öffnungen 56 bzw. 58 versehen sind, die vorzugsweise die gleiche Querschnittsfläche wie die stirnseitigen Öffnungen 48 und 50 aufweisen.

Somit weist der erste Abschnitt 12 des Entladungskanals 10 vier durch die Kanalelemente 40a-d gebildete Durchtrittskanäle 60a-d auf, durch welche das Lasergas von dem äußeren Lasergaskanal 18 in Längsrichtung 22 zu dem mittigen Lasergaskanal 16 hindurchströmen kann.

Der zweite Abschnitt 14 des Entladungskanals 10 ist jeweils identisch ausgebildet wie der erste Abschnitt 12 und weist daher ebenfalls insgesamt vier nebeneinander liegende Kanalelemente 62a-d auf, die mit ihren Kanalachsen 64a-d parallel zueinander und parallel zur Längsrichtung 22 ausgerichtet sind. Diese Kanalelemente 62a-d erstrecken sich zwischen zwei Stirnseiten 66 und 68 und weisen stirnseitige Öffnungen 70 und 72 auf.

Mit ihren Stirnseiten 66 und 68 liegen die Kanalelemente 62a-d ebenfalls an Wandplatten 74 bzw. 76 an, die ihrerseits mit den stirnseitigen Öffnungen 70 und 72 fluchtende Öffnungen 78 und 80 aufweisen. Dadurch bildet der zweite Abschnitt 14 ebenfalls Durchtrittskanäle 82a-d für das Lasergas, damit dies von dem äußeren Lasergaskanal 20 in den mittigen Lasergaskanal 16 strömen kann.

Der mittige Lasergaskanal 16 ist dabei von den Wandplatten 54 und 56 seitlich begrenzt. Ferner sind die äußeren Lasergaskanäle 18 und 20 auf ihren dem Entladungskanal zugewandten Seite von den Wandplatten 52 und 74 begrenzt.

Darüber hinaus sind die Kanalachsen 42a-d so angeordnet, daß sie mit den jeweiligen Kanalachsen 64a-d paarweise fluchten, das heißt, daß die Kanalachse 42a des Kanalelements 40 mit der Kanalachse 64a des Kanalelements 62 fluchtet und die Kanalachse 42b des Kanalelements 40b mit der Kanalachse 64b des Kanalelements 62.

Darüber hinaus sind die Kanalelemente 62a-d des Entladungskanals 10 untereinander identisch ausgebildet und gleichfalls identisch mit den Kanalelementen 40a-d, so daß auch ein Querschnitt der Durchtrittskanäle 60a-d mit dem der Durchtrittskanäle 82 identisch ist.

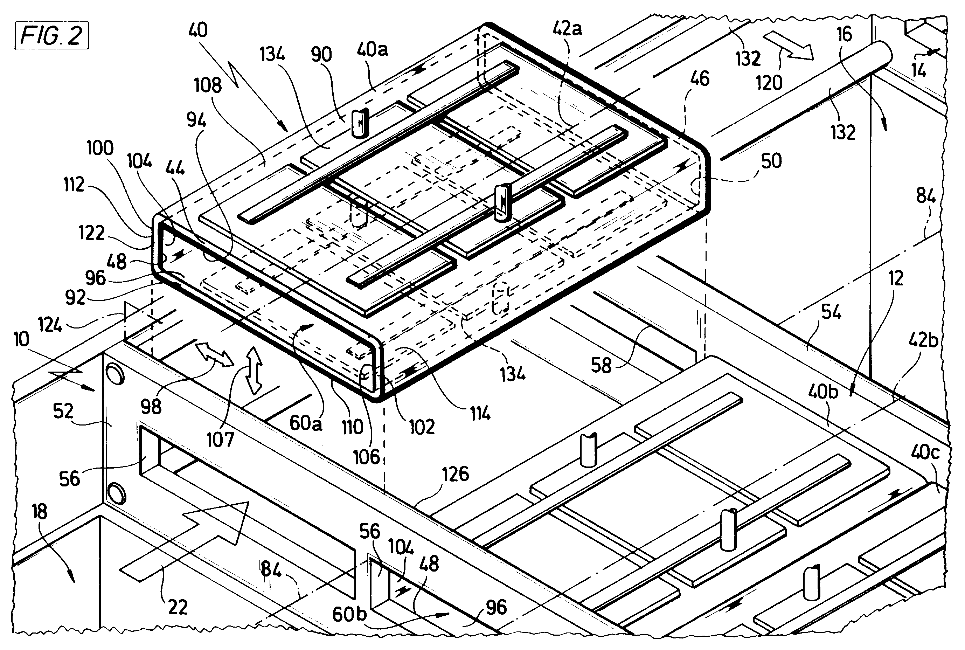

Ferner weist ein zwischen den Spiegelsätzen 32 und 36 in der Längsrichtung 22 erstreckendes Strahlenbündel 84 einen an die Durchtrittskanäle 60a-d und 82a-d angepaßten Querschnitt auf. Bei dem vorliegenden erfindungsgemäßen Ausführungsbeispiel sind die Spiegelsätze 32 und 36 so ausgebildet, daß das Strahlenbündel 84 zunächst durch die Durchtrittskanäle 60a und 82a hindurchtritt, dann von dem Spiegelsatz 36 so reflektiert wird, daß das Strahlenbündel durch die Durchtrittskanäle 82b und 60b hindurchverläuft, dann wiederum vom Spiegelsatz 32 so reflektiert wird, daß es durch die Durchtrittskanäle 60c und 82c hindurchverläuft, wiederum vom Spiegelsatz 36 reflektiert wird, so daß es schließlich durch die Durchtrittskanäle 82d und 60d hindurchtritt und im Fall eines instabilen Resonators aus einem mit dem Spiegelsatz 32 verbundenen Fenster als Laserstrahl 38 austritt. Im Fall eines stabilen Resonators weist der Spiegelsatz 32 anstelle des Fensters einen teildurchlässigen Spiegel auf. Die Kanalelemente 40a-d und 62a-d sind, wie exemplarisch an Hand eines Kanalelements 40, dargestellt in Fig. 2, beschrieben, im einzelnen wie folgt ausgebildet.

Jedes Kanalelement ist ein einstückiges Rohr aus Keramik oder Quarz mit einer oberen Querwand 90 und einer unteren Querwand 92, die parallel zueinander verlaufen und eine obere innere Wandfläche 94 sowie eine untere innere Wandfläche 96 bilden, die parallel zu einer ersten Querrichtung 98 ausgerichtet sind und im Abstand voneinander verlaufen.

Darüber hinaus sind die obere Querwand 90 und die untere Querwand 92 auf einander gegenüberliegenden Seiten durch Seitenwände 100 und 102 im Abstand voneinander gehalten, welche innere Wandflächen 104 und 106 aufweisen, die parallel zu einer zweiten Querrichtung 107 verlaufen, wobei vorzugsweise die zweite Querrichtung 107 senkrecht auf der ersten Querrichtung 98 steht.

Die inneren Wandflächen 94, 96, 104 und 106 begrenzen somit einen im wesentlichen rechteckigen Innenquerschnitt des Kanalelements 40 und somit des von diesem gebildeten Durchtrittskanals 60. Darüber hinaus sind die obere Querwand 90 mit einer äußeren Wandfläche 108 und die untere Querwand 92 mit einer äußeren Wandfläche 110 versehen, die ebenfalls parallel zueinander verlaufen und vorzugsweise im selben Abstand von der jeweiligen inneren Wandfläche 94 bzw. 96, so daß die obere Querwand 90 und die untere Querwand 92 im wesentlichen dieselbe Dicke aufweisen.

Darüber hinaus sind auch die Seitenwände 100 und 102 mit äußeren Seitenwandflächen 112 und 114 versehen, die ebenfalls parallel zueinander verlaufen sowie auch parallel zu den inneren Wandflächen 104 und 106 und im wesentlichen im selben Abstand von diesen, so daß auch die Seitenwände 100 und 102 im wesentlichen dieselbe Dicke aufweisen, vorzugsweise dieselbe Dicke wie die obere Querwand 90 und die untere Querwand 92.

Vorzugsweise ist jedes der Kanalelemente 40, 62 als selbst tragende Struktur aufgebaut, wobei die obere Querwand 90 und die untere Querwand 92 durch die Stützstege bildende Seitenwände 100 und 102 im Abstand voneinander gehalten sind. Erfindungsgemäß sind dabei die Querwände 90 und 92 sowie die Seitenwände 100 und 102 einstückig miteinander verbunden und günstigerweise ist jedes der Kanalelemente 40, 62 als integrales Teil aus einem Stück hergestellt.

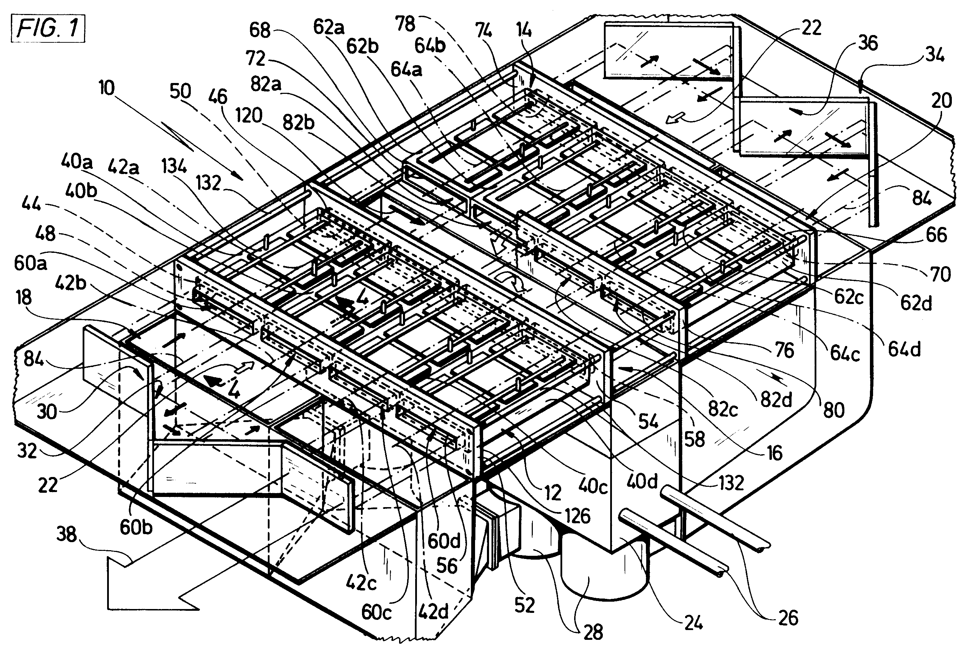

Wie in Fig. 1 dargestellt, liegen bei dem beschriebenen Ausführungsbeispiel die Kanalelemente 40a-d in einer Anbaurichtung 120 nebeneinander, wobei die Anbaurichtung 120 parallel zur ersten Querrichtung 98 verläuft. Somit liegen aufeinanderfolgende Kanalelemente 40 mit ihren äußeren Seitenwandflächen 112 und 114 nebeneinander, wobei vorzugsweise die äußeren Seitenwandflächen 114 und 112 von in der Anbaurichtung 120 nebeneinanderliegenden Kanalelementen 40 aneinander anliegen.

Das Gleiche gilt für die Kanalelemente 62a-d, die identisch wie die Kanalelemente 40 aufgebaut sind.

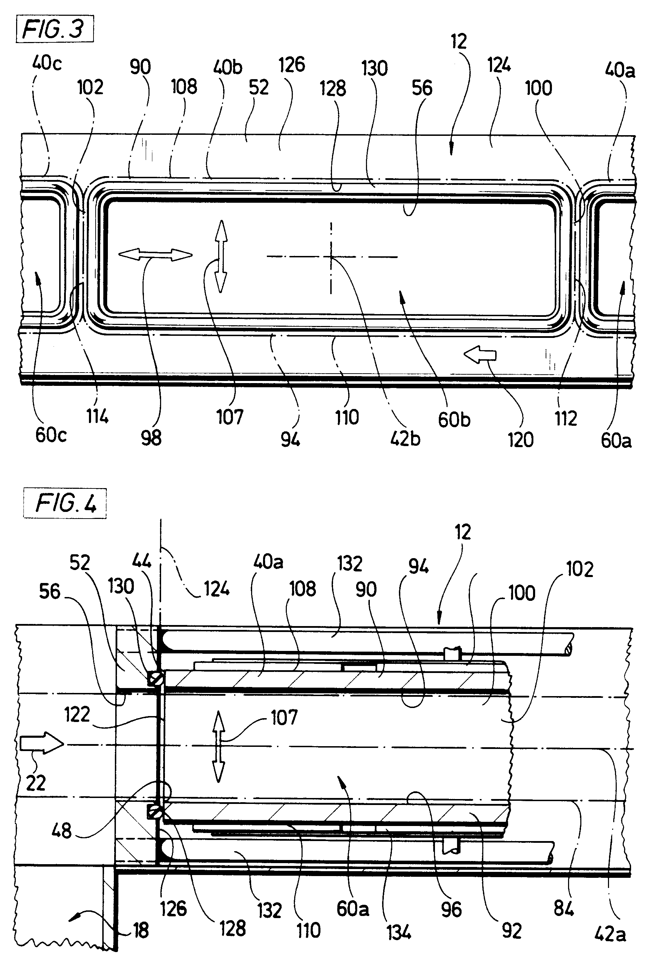

Damit stützen sich die Kanalelemente gegenseitig mit ihren äußeren Seitenwänden 112 und 114 gegeneinander ab. Darüber hinaus ist, wie in Fig. 3 und Fig. 4 dargestellt, jedes der Kanalelemente 40 und 62 gegenüber der jeweiligen Wandplatte abgedichtet. Dies ist im folgenden am Beispiel der Dichtung eines der Kanalelemente 40 gegenüber der Wandplatte 52, das in Fig. 3 und 4 dargestellt ist, beschrieben. Das Kanalelement 40 ist an seiner Stirnseite 44 mit einer Stirnfläche 122 versehen ist, die in einer Ebene 124 liegt, welche parallel zu einer Rückseite 126 der Wandplatte 52 verläuft. In die Wandplatte 52 ist außerdem um jede von deren Öffnungen 56 herum verlaufend eine Nut 128 vorgesehen, in welcher eine Dichtung 130 liegt, die in der Nut 128 geschlossen um jede der Öffnungen 56 umläuft und so angeordnet ist, daß bei an der Wandplatte 52 anliegendem Kanalelement 40 die Dichtung an der Stirnfläche 122 dieses Kanalelements anliegt, sofern die Öffnung 56 mit der stirnseitigen Öffnung 48 des Kanalelements fluchtet.

Eine ausreichende Abdichtung zwischen der Wandplatte 52 und dem Kanalelement 40 wird dadurch erreicht, daß die Dichtung 130 einerseits in die Stirnfläche 122 und andererseits in die Nut 128 gepreßt wird. Hierzu sind, wie in Fig. 1 dargestellt, die Wandplatten 52 und 54 sowie 74 und 76 durch Spannanker 132, die parallel zur Längsrichtung 22 verlaufen, in Richtung aufeinanderzu verspannt, so daß jedes der Kanalelemente 40 und 62 im Bereich seiner Stirnseiten 44 und 46 sowie 66 und 68 zwischen den Wandplatten 52 und 54 bzw. 74 und 76 eingespannt ist und dabei die jeweils zwischen diesen liegende Dichtung 130 die notwendige Pressung erhält.

Darüber hinaus sind die Spannanker 132 so ausgebildet, daß sie auch den mittigen Lasergaskanal 16 durchsetzen und somit gleichzeitig den ersten Abschnitt 12 relativ zum zweiten Abschnitt 14 des Entladungskanals so ausgerichtet halten, daß die Kanalachsen 42 mit den Kanalachsen 64 fluchten.

Da die Kanalelemente 40 und 62 einen rechteckförmigen Innenquerschnitt aufweisen, wird vorzugsweise das Strahlenbündel 84 diesem rechteckigen Innenquerschnitt angepaßt, so daß dieses im wesentlichen den gesamten Innenquerschnitt des jeweiligen Durchtrittskanals 60 bzw. 82 ausfüllend die Kanalelemente 40 bzw. 62 auf seinem Weg von Spiegelsatz 32, 34 zu Spiegelsatz 34, 32 mäanderförmig durchsetzt.

Vorzugsweise sind ferner die Spiegelsätze 32 und 34 so aufgebaut, daß das Strahlenbündel 84 das Strahlenbündel eines instabilen Resonators ist.

Die Hochfrequenzanregung erfolgt erfindungsgemäß, wie ebenfalls in Fig. 1 dargestellt, durch auf den äußeren Randflächen 108 und 110 liegende Elektroden 134, welche vorzugsweise plattenförmig ausgebildet sind und sich über die gesamte Erstreckung der inneren Wandflächen 94 und 96 in der ersten Querrichtung 98 erstrecken, wobei in Längsrichtung der Kanalelemente 40, 62 drei parallelgeschaltete Elektroden hintereinanderliegend angeordnet sind.

Durch diese Elektroden 134 erfolgt eine Hochfrequenzentladung in dem jeweiligen Durchtrittskanal 60 bzw. 82 parallel zur zweiten Querrichtung 107, wobei die Hochfrequenzentladung in Richtung der ersten Querrichtung 98 im wesentlichen konstant ist. Dadurch wird das das jeweilige Kanalelement 40 bzw. 62 durchströmende Lasergas in diesem angeregt, so daß sich Laserstrahlung in Form des Strahlenbündels 84 zwischen den Spiegelsätzen 32 und 34 ausbildet.

Damit die erfindungsgemäßen Kanalelemente 40, 62 nicht nur zum Aufbau des Entladungskanals 10 beitragen, sondern gleichzeitig auch ein Dielektrikum zur Erzeugung einer gleichmäßigen, parallel zur zweiten Querrichtung 107 verlaufenden Hochfrequenzentladung über die gesamte erste Querrichtung 98 aufweisen, sind die Kanalelemente selbst aus dem dielektrischen Material, vorzugsweise Keramik oder Quarz, hergestellt.

Durch die Wahl eines dielektrischen Materials für die erfindungsgemäßen Kanalelemente 40, 62 werden sämtliche Probleme durch Spannungsüberschläge aufgrund der Hochfrequenzanregung dadurch vermieden, daß der Entladungskanal 10 im Bereich der Elektroden 134 völlig metallfrei aufgebaut werden kann, da die Kanalelemente 40, 62 aufgrund ihrer selbsttragenden Struktur keine metallene Stützkonstruktion erfordern, sondern selbst die Elektroden 134 tragen, so daß in der Anbaurichtung 120 im Prinzip eine beliebig große Zahl von Kanalelementen (40, 62) nebeneinanderliegend angeordnet werden kann.

Bei den beschriebenen Ausführungsbeispielen strömt das Lasergas $CO_2$ bei einem Druck von ungefähr 100 mbar und die Hochfrequenzentladung erfolgt bei einer Frequenz von 10 bis 50 MHz.

**Patentansprüche**

1.   Hochfrequenzangeregter längsgeströmter Gaslaser, umfassend einen Entladungskanal, welcher in einer Strömungsrichtung von Lasergas durchströmt ist und beiderseits des Entladungskanals angeordnete Hochfrequenzelektroden zur Erzeugung einer Hochfrequenzentladung quer zur Strömungsrichtung,
**dadurch gekennzeichnet,** daß
der Entladungskanal (10) mehrere Kanalelemente (40, 62) umfaßt, deren Kanalachsen (42, 64) parallel zueinander in der Strömungsrichtung (22) ausgerichtet sind, daß die Kanalelemente (40, 62) in einer Anbaurichtung (120) quer zur Strömungsrichtung (22) nebeneinanderliegend angeordnet sind und daß die Kanalelemente (40, 62) einen Querschnitt aufweisen, welcher in einer ersten Querrichtung (98) senkrecht zur Strömungsrichtung (22) eine größere Ausdehnung aufweist als in einer zur ersten (98) und zur Strömungsrichtung (22) senkrecht verlaufenden zweiten Querrichtung (107).

2. Gaslaser nach Anspruch 1, dadurch gekennzeichnet, daß die erste Querrichtung (98) parallel zur Anbaurichtung (120) verläuft.

3. Gaslaser nach Anspruch 1, dadurch gekennzeichnet, daß die zweite Querrichtung (107) parallel zur Anbaurichtung (120) verläuft.

4. Gaslaser nach einem der voranstehenden Ansprüche, dadurch gekennzeichnet, daß die Hochfrequenzentladung parallel zur zweiten Querrichtung (107) verläuft.

5. Gaslaser nach Anspruch 4, dadurch gekennzeichnet, daß die Hochfrequenzentladung in Richtung parallel zur ersten Querrichtung (98) im wesentlichen konstant ist.

6. Gaslaser nach einem der voranstehenden Ansprüche, dadurch gekennzeichnet, daß die Kanalelemente (40, 62) parallel zur ersten Querrichtung (98) verlaufende und einander gegenüberliegende abgeflachte innere Wandflächen (94, 96) aufweisen.

7. Gaslaser nach einem der voranstehenden Ansprüche, dadurch gekennzeichnet, daß die Kanalelemente (40, 62) parallel zur zweiten Querrichtung (107) verlaufende und einander gegenüberliegende abgeflachte innere Wandflächen (104, 106) aufweisen.

8. Gaslaser nach einem der voranstehenden Ansprüche, dadurch gekennzeichnet, daß die Kanalelemente (40, 62) auf gegenüberliegenden Seiten senkrecht zu der Anbaurichtung (120) verlaufende abgeflachte äußere Wandflächen (100, 102) aufweisen.

9. Gaslaser nach einem der voranstehenden Ansprüche, dadurch gekennzeichnet, daß die Kanalelemente (40, 62) auf gegenüberliegenden Seiten parallel zu der Anbaurichtung (120) verlaufende abgeflachte äußere Wandflächen (108, 110) aufweisen.

10. Gaslaser nach einem der voranstehenden Ansprüche, dadurch gekennzeichnet, daß die Kanalelemente (40, 62) einen im wesentlichen rechteckigen Innenquerschnitt aufweisen.

11. Gaslaser nach einem der voranstehenden Ansprüche, dadurch gekennzeichnet, daß die Kanalelemente (40, 62) von einem einen im wesentlichen dem Innenquerschnitt der Kanalelemente (40, 62) angepaßten Querschnitt aufweisenden Strahlenbündel (84) durchsetzt sind.

12. Gaslaser nach einem der voranstehenden Ansprüche, dadurch gekennzeichnet, daß die Kanalelemente (40, 62) von einem Strahlenbündel (84) eines instabilen Resonators durchsetzt sind.

13. Gaslaser nach einem der voranstehenden Ansprüche, dadurch gekennzeichnet, daß der Entladungskanal (10) mehrere sich beiderseits eines Lasergaskanals (16) von diesem weg erstreckende und paarweise mit ihren Kanalachsen (42, 64) untereinander fluchtend angeordnete Durchtrittskanäle (60, 82) aufweist.

14. Gaslaser nach Anspruch 13, dadurch gekennzeichnet, daß sich der Lasergaskanal (16) in Anbaurichtung (120) erstreckt.

15. Gaslaser nach einem der voranstehenden Ansprüche, dadurch gekennzeichnet, daß an beiden Außenseiten des Entladungskanals (10) jeweils ein äußerer Lasergaskanal (18, 20) angeordnet ist, an welchen sich dem Entladungskanal (10) gegenüberliegend jeweils eine Spiegelkammer (30, 34) anschließt.

16. Gaslaser nach Anspruch 15, dadurch gekennzeichnet, daß die äußeren Lasergaskanäle (18, 20) Lasergaszufuhrkanäle sind.

17. Gaslaser nach einem der voranstehenden Ansprüche, dadurch gekennzeichnet, daß die Kanalelemente (40, 62) aus einem elektrisch nicht leitenden Material hergestellt sind.

18. Gaslaser nach Anspruch 17, dadurch gekennzeichnet, daß die Kanalelemente (40, 62) aus Keramik oder Quarz hergestellt sind.

19. Gaslaser nach einem der voranstehenden Ansprüche, dadurch gekennzeichnet, daß die Kanalelemente (40, 62) identisch ausgebildet sind.

20. Gaslaser nach einem der voranstehenden Ansprüche, dadurch gekennzeichnet, daß die Kanalelemente (40, 62) eine selbsttragende Struktur aufweisen.

21. Gaslaser nach Anspruch 20, dadurch gekennzeichnet, daß die Kanalelemente (40, 62) eine obere Querwand (90) und eine untere Querwand (92) und diese im Abstand voneinander haltende Stützstege (100, 102) aufweisen, die ein zusammenhängendes Teil bilden.

22. Gaslaser nach Anspruch 20 oder 21, dadurch gekennzeichnet,daß die Kanalelemente (40, 62) einstückige Teile sind.

23. Gaslaser nach einem der voranstehenden Ansprüche, dadurch gekennzeichnet, daß die Kanalelemente (40, 62) die Elektroden (134) tragen.

24. Gaslaser nach einem der voranstehenden Ansprüche, dadurch gekennzeichnet, daß die Kanalelemente (40, 62) in der Anbaurichtung (120) unmittelbar nebeneinander liegen.

25. Gaslaser nach einem der voranstehenden Ansprüche, dadurch gekennzeichnet, daß die Kanalelemente (40, 62) durch Halteelemente (52, 54, 74, 76, 132) miteinander verbunden sind.

26. Gaslaser nach Anspruch 25, dadurch gekennzeichnet, daß die Kanalelemente (40, 62) stirnseitig an Wandplatten (52, 54, 74, 76) anliegen

27. Gaslaser nach Anspruch 26, dadurch gekennzeichnet, daß alle in einer Anbaurichtung nebeneinanderliegenden Kanalelemente (40, 62) mit jeweils einer Stirnseite (44, 46, 66, 68) an einer gemeinsamen Wandplatte (52, 54, 74, 76) anliegen.

28. Gaslaser nach Anspruch 26 oder 27, dadurch gekennzeichnet, daß die Wandplatten (52, 54, 74, 76) mit Zugankern (132) in Richtung aufeinanderzu beaufschlagt gehalten sind.

29. Gaslaser nach einem der voranstehenden Ansprüche, dadurch gekennzeichnet, daß die Kanalelemente (40, 62) stirnseitige Öffnungen (48, 50) mit einer in einer Ebene liegenden und geschlossen um die Öffnungen (48, 50) umlaufende Dichtfläche (122) aufweisen.

FIG. 1

FIG. 2

FIG.3

FIG.4